**Europäisches Patentamt**

**European Patent Office**

**Office européen des brevets**

(11) Veröffentlichungsnummer: **0 248 921**
**B1**

(12) **EUROPÄISCHE PATENTSCHRIFT**

(45) Veröffentlichungstag der Patentschrift:
**29.08.90**

(51) Int. Cl.⁵: **A01J 25/16**, A01J 25/13

(21) Anmeldenummer: **86107819.4**

(22) Anmeldetag: **09.06.86**

(54) Stapelbare Blockform für Käsestücke.

(43) Veröffentlichungstag der Anmeldung:
**16.12.87 Patentblatt 87/51**

(45) Bekanntmachung des Hinweises auf die Patenterteilung:
**29.08.90 Patentblatt 90/35**

(84) Benannte Vertragsstaaten:
**AT CH DE FR GB IT LI**

(56) Entgegenhaltungen:
**EP-A- 0 134 013**
**DE-A- 2 316 038**
**DE-A- 2 449 916**
**DE-U- 7 314 275**
**FR-A- 2 197 506**
**FR-A- 2 234 854**

(73) Patentinhaber: **ALPMA Alpenland Maschinenbau Hain & Co. KG, D-8093 Rott am Inn(DE)**

(72) Erfinder: **Hain, Gottfried, Dipl.-Ing., Lehen 53, D-8098 Pfaffing(DE)**
Erfinder: **Wulff, Bernd, Birkenriedweg 13, D-8209 Stephanskirchen(DE)**

(74) Vertreter: **Hain, Leonhard, Dipl.-Ing., Tal 18/IV, D-8000 München 2(DE)**

## Beschreibung

Die Erfindung betrifft eine stapelbare Käseblockform für insbesondere einer natürlichen Reifung unterliegende, mittels temperierter oder klimatisierter Luft zu behandelnde Käsestücke, gemäß dem Oberbegriff des Patentanspruches 1.

Solche Blockformen eignen sich besonders zum Einsatz in einer Vorrichtung zum Behandeln von Käsestücken (DE-A-33 28 589) in einem Belüftungstunnel, durch den die Käsestücke in stapelbaren Blockformen auf einer Transportbahn bewegt werden. Der Belüftungstunnel bildet einen abgeschlossenen Luftumwälzraum, um eine Temperierung aller im Stapel vorhandenen Käsestücke zu erreichen. In der Praxis zeigte sich aber, daß die bekannten Formensätze keine gleichmäßige Belüftung zulassen. Vor allem der im Innern eines Stapels auftretende Wärmestau und die schnellere Abkühlung der Käsestücke an den Stapelrändern beeinflussen die Entmolkung der Käsestücke ungünstig. Qualitative und quantitative Abweichungen, z.B. Feuchtigkeitsgehalt, Konsistenz, Gewichtsstreuung und Ausbeuteverluste, sind die Folge. Eine Verbesserung konnte mit den Blockformen nach DE-C-24 49 916 erreicht werden, die zwischen den Einzelformen durchgehende Lüftungskamine bilden. Aber auch hierbei lassen sich Temperaturunterschiede von 2 bis 3 °C zwischen außen und innen nicht vermeiden.

Der Erfindung liegt nunmehr die Aufgabe zugrunde, eine stapelbare Käseblockform zu schaffen, die eine wirksame und gleichmäßige Belüftung und damit Temperierung der Käsestücke auch innerhalb eines größeren Formenstapels ermöglicht.

Diese Aufgabe wird durch eine stapelbare Käseblockform gemäß dem Oberbegriff des Patentanspruches 1 erfindungsgemäß durch die kennzeichnenden Merkmale dieses Patentanspruches gelöst.

Vorteilhafte Weiterentwicklungen der Erfindung sind in Unteransprüchen beansprucht.

Die erfindungsgemäße Käseblockform ist in ihrer Konstruktion einfach und stabil. Sie läßt sich gut handhaben und stapeln. Im Stapel bildet sie genau festgelegte Belüftungskamine für beschleunigte und störungsfreie Luftströmungen. Dabei wird jede Einzelform von etwa gleichen Luftmengen bestrichen. Durch die gleichmäßige Temperierung und Klimatisierung der Käsetücke wird die Entmolkung und Verfestigung der Käsestücke ebenfalls gleichmäßig beeinflußt. Vor allem gelingt es nunmehr, die Temperatur innerhalb eines Blockformen-Stapels sowhol im Außen- als auch im Innenbereich gleichmäßig abzusenken und dadurch alle Käsestücke gleichen Einflüssen zu unterwerfen. Die durchgehenden Belüftungskamine verhindern Luftwirbel und Strömungsumlenkungen, wodurch erhöhte Strömungsgeschwindigkeiten und Durchsatzmengen bei niedrigem Energieaufwand möglich sind.

Die Erfindung wird nachfolgend anhand eines Ausführungsbeispiels, das auch in der Zeichnung schematisiert dargestellt ist, näher beschrieben. Es zeigen:

Fig. 1 einen Vertikalschnitt durch einen Belüftungstunnel,

Fig. 2 eine Seitenansicht eines teilweise aufgeschnittenen Käseblockformen-Stapels und

Fig. 3 eine Draufsicht auf eine Käseblockform.

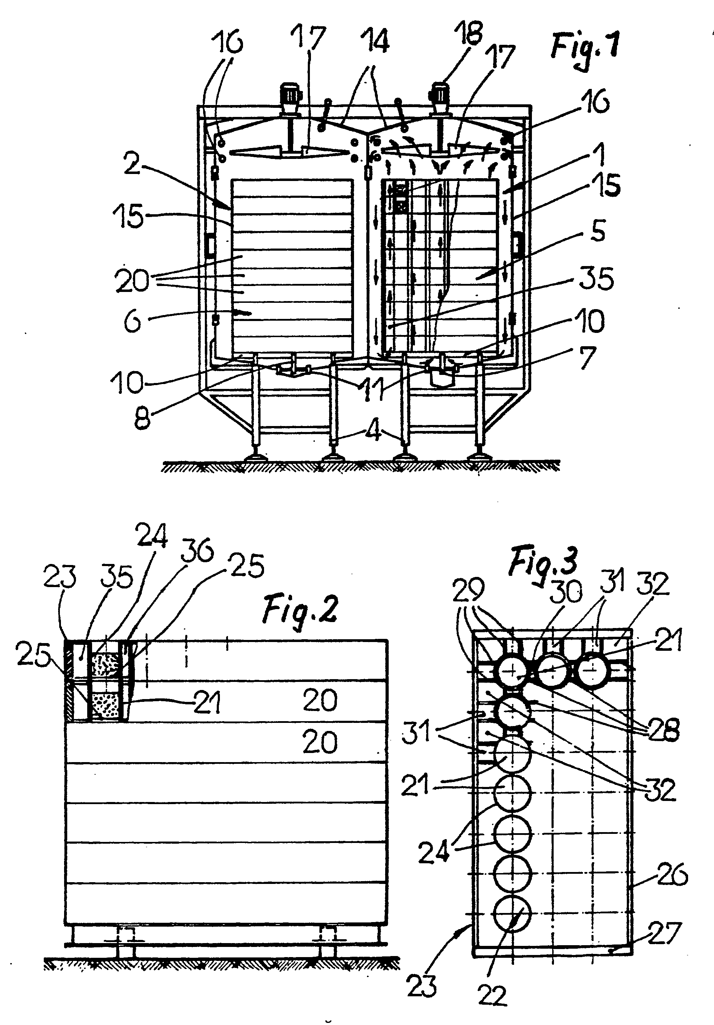

Ein in Fig. 1 dargestellter Belüftungstunnel umfaßt zwei Transportbahnen, und zwar einen Vorschubtunnel 1 und einen Rückschubtunnel 2, die durch einen Gestellrahmen miteinander verbunden und durch Stützfüsse 4 abgestützt sind. Der Transport der Formenstapel 5 bzw. 6 durch den Tunnel erfolgt mittels Zahnstangen oder Mitnehmerketten 7,8. Die Formenstapel sind zweckmäßig auf Stapelpaletten 10 mit Rollen 11, die auf Schienen (nicht gezeichnet) abrollen, aufgesetzt. Aus Platzgründen werden die meist länglichen Stapel in Querstellung transportiert. Jeder Tunnel 1,2 besteht aus einer satteldachförmigen Dachhaube 14 und den Seitenwänden 15. In der Dachhaube befinden sich längs den Seitenwänden die Wärmetauscherrohre 16 sowie die Lüfterräder 17, die von außenliegenden Antriebsmotoren 18 angetrieben sind. Die Lüfterräder 17 entsprechen der Stapellänge 5, 6, so daß sich der durch die Lüfterräder bewirkte Ansaugstrom auf die gesamte Stapelfläche verteilt. Diese hochsteigende Luft wird durch das Satteldach zu den Seitenwänden umgelenkt, wobei sie die Wärmetauscherrohre umströmt, hierauf nach unten und schließlich unten in den Stapel eingeführt wird. Zusätzliche Leitwände (nicht gezeichnet) können zur Führung dieses Luftstromes vorgesehen sein.

Der in den Fig. 2 und 3 dargestellte Stapel setzt sich aus aufeinandergestellten Blockformen 20 zusammen, die aus einem von in Reihen angeordneten Einzelformen 21 gebildeten Formensatz 22 und einem Umfangsrahmen 23 bestehen. Die Einzelformen können perforierte Wände 24 und einen geschlossenen Ablaufboden 25 aufweisen. Wie insbesondere aus Fig. 3 zu sehen ist, umschließt der Umfangsrahmen 23 mit seinen Längs- und Querwänden 26 bzw. 27 den Formensatz vollständig. Die Höhe der Längs- und Querwände entspricht der Höhe der Einzelformen 21, so daß im Stapel nicht nur die Einzelformen, sondern auch die Rahmenwände satt aufeinanderstehen. Beim gezeigten Umfangsrahmen sind die Querwände 27 aus Stabilitätsgründen aus dickerem Material als die Längswände gefertigt. Die Einzelformen sind miteinander durch die Zwischenstege 28 und der Umfangsrahmen mit den benachbarten Einzelformen durch die Rahmenstege 29 verbunden, so daß der so eingerahmte Formensatz eine stabile Baueinheit bildet. Im Ausführungsbeispiel ist der Abstand des Umfangsrahmens vom Formensatz etwas größer als die Abstände zwischen den Formen. Die Zwischenstege 28 wie auch die Rahmenstege 29 sind flächenförmig und erstrecken sich annähernd auf die volle Höhe der Formen bzw. des Rahmens. Durch die doppelte Anordnung der Zwischen- und Rahmenstege wird nicht nur die Statik der Blockform verbessert, sondern es entstehen zusätzliche Räume 30,31, die mit den weiteren Anschlußräumen 32 jede Einzelform vollständig umschließen. Im Stapel bilden dann diese genau aufeinander ausgerichteten Räume von unten nach oben durchgehende Belüftungskamine 35,36 für eine weitgehend wirbelfreie Luftströmung. In gegenüberliegenden Querwänden 27 sind zweckmäßig noch Eingriffsöffnungen (nicht gezeichnet) für die Hubarme eines Gabelstaplers od. dgl. vorgesehen.

Die von unten in einen solchen Stapel eintretende Luft wird durch ein Lüfterrad 17 oben angesaugt und nach Abkühlung in einem Kreislauf wieder nach unten abgesenkt. Dabei kommt die abfallende Kühlluft nur mit der Außenfläche der Umfangsrahmen 23 in Berührung und da zwischen dem Formensatz und dem Umfangsrahmen zweckmäßigerweise ein etwas größerer Abstand besteht, wird durch diese Kühlluft und der damit verbundenen Abkühlung der Rahmenwände die in den Einzelformen vorhandene Käsemasse nicht ungünstig beeinflußt. Vielmehr wirkt auf die einzelnen Käsestücke auch in diesem Rahmenbereich nur die aufsteigende Luftströmung und da diese über den ganzen Stapelquerschnitt gleiche Beschaffenheit aufweist, ergibt sich auch eine gleichmäßige Behandlung der Käsestücke. Die durchgehenden Belüftungskamine, die nur eine Vertikalströmung zulassen, ermöglichen eine beschleunigte Durchströmung der Behandlungsluft, wobei dieser Lufttransport keinen merklichen Kraftaufwand erfordert, so daß schon ein gewöhnlicher Ventilatorflügel ausreicht, eine starke Luftströmung zu erzeugen. Gerade mit den erfindungsgemäßen Belüftungskaminen ist es auch möglich, Veränderungen in der Lufttemperatur und -Feuchtigkeit voll und rasch wirksam werden zu lassen.

Die Erfindung beschränkt sich nicht auf das dargestellte Ausführungsbeispiel. So könnten anstelle der jeweils zwei Zwischen- und Rahmenstege auch nur ein einziger Steg vorgesehen sein. Die Käseformen selbst können auch jede andere gebräuchliche Querschnittform und die Blockformen jede andere Flächengestalt aufweisen. Eine aus den Einzelformen austretende Molke kann in den Belüftungskaminen die Formenwände entlang nach unten ablaufen. Falls die Einzelformen im Stapel nicht aufeinandersitzen, übernehmen die Umfangsrahmen die Stapelbelastung allein. Sind aber die Einzelformen aufeinandergesetzt, dann brauchen die Umfangsrahmen sich nicht unbedingt zu berühren. Der Zwischenraum zwischen den übereinander angeordneten Rahmen soll aber nicht so groß sein, daß Seitenluft im merklichen Umfang eintreten und die aufsteigende Luftströmung ind en Belüftungskaminen stören kann.

## Patentansprüche

1. Stapelbare Käseblockform für insbesondere einer natürlichen Reifung unterliegende, mittels temperierter oder klimatisierter Luft zu behandelnde Käsestücke, mit im Abstand voneinander angeordneten Einzelformen (21) sowie einem diesen Formensatz (22) umschließenden Umfangsrahmen (23), dadurch gekennzeichnet, daß der Umfangsrahmen (23) vom Formensatz (22) in einem Abstand angeordnet ist und seine Längs- und Querwände (26,27) eine der Formenhöhe entsprechende Höhe aufweisen.

2. Käseblockform nach Anspruch 1, dadurch gekennzeichnet, daß der Abstand der Umfangsrahmens (23) vom Formensatz (22) größer als der zwischen den Einzelformen (21) dieses Formensatzes ist.

3. Käseblockform nach Anspruch 1 oder 2, dadurch gekennzeichnet, daß der Umfangsrahmen (23) mit jeder benachbarten Einzelform (21) des Formensatzes durch mindestens einen Rahmensteg (29) verbunden ist.

4. Käseblockform nach Anspruch 3, dadurch gekennzeichnet, daß zwischen dem Umfangsrahmen und jeder benachbarten Einzelform zwei im Abstand voneinander angeordnete Rahmenstege (29) vorgesehen sind.

5. Käseblockform nach einem der Ansprüche 1 bis 4, dadurch gekennzeichnet, daß die Zwischen- und Rahmenstege (28,29) sich annähernd auf die Höhe der Einzelformen erstrecken.

6. Käseblockform nach einem der Ansprüche 1 bis 5, dadurch gekennzeichnet, daß in mindestens einer Rahmenwand (27) Eingriffsöffnungen für Hubarme ausgebildet sind.

## Revendications

1. Châssis superposable de moules à fromage, destiné à des pièces de fromage subissant notamment une maturation naturelle et devant être traitées au moyen d'air tempéré ou climatisé, châssis comportant des moules individuels (21) agencés en étant mutuellement espacés, ainsi qu'un cadre périphérique (23) entourant ce jeu de moules (22), caractérisé en ce que le cadre périphérique (23) est disposé à une certaine distance du jeu de moules (22), et en ce que les parois longitudinales et transversales (26, 27) du cadre présentent une hauteur correspondant à celle des moules.

2. Châssis de moules à fromage selon la revendication 1, caractérisé en ce que la distance du cadre périphérique (23) au jeu de moules (22) est supérieure à l'intervalle entre les différents moules individuels (21) de ce jeu de moules.

3. Châssis de moules à fromage selon la revendication 1 ou 2, caractérisé en ce que le cadre périphérique (23) est relié à chacun des moules individuels voisins (21), au moyen d'au moins une barrette de cadre (29).

4. Châssis de moules à fromage selon la revendication 3, caractérisé en ce que deux barrettes de cadre (29) espacées entre-elles, sont prévues entre le cadre périphérique et chaque moule individuel voisin.

5. Châssis de moules à fromage selon l'une des revendications 1 à 4, caractérisé en ce que les barrettes intermédiaires (28) et les barrettes de cadre (29) s'étendent sensiblement sur la hauteur des moules individuels.

6. Châssis de moules à fromage selon l'une des revendications 1 à 5, caractérisé en ce que des ouvertures de saisie pour bras de levage sont prévues dans au moins une des parois de cadre (27).

## Claims

1. Stackable cheese blocks mould particularly for pieces of cheese subjected to a natural maturing process which are to be treated by tempered or conditioned air the blocks mould having individual moulds (21) arranged with a space between them and a peripheral frame (23) enclosing said set (22) of moulds, characterized in that the peripheral frame (23) is arranged with a distance to the set (22) of moulds and that the longitudinal and transversal walls (26, 27) of the frame have a height corresponding to the height of the moulds.

2. Cheese blocks mould according to claim 1, characterized in that the space between the peripheral frame (23) and the set (22) of moulds is larger than that between the individual moulds (21) of said set of moulds.

3. Cheese blocks mould according to claim 1 or 2, characterized in that the peripheral frame (23) is connected to every neighbouring individual mould of the set of moulds by at least one frame web (29).

4. Cheese blocks mould according to claim 3, characterized in that between the peripheral frame and every neighbouring individual mould two frame webs (29) are provided with a space between them.

5. Cheese blocks mould according to one of the claims 1 to 4, characterized in that the intermediate webs (28) and the frame webs (29) extend approximately to the height of the individual moulds.

6. Cheese blocks mould according to one of the claims 1 to 5, characterized in that in at least one of the frame walls (27) catch openings for lifting arms are provided.

Fig. 1

Fig. 2

Fig. 3